# EUROPÄISCHE PATENTSCHRIFT

(11) **EP 2 838 771 B1**
(45) Veröffentlichungstag und Bekanntmachung des Hinweises auf die Patenterteilung: **23.12.2020**
(21) Anmeldenummer: 13716274.9
(22) Anmeldetag: 11.04.2013
(51) Int. Cl.: B60W 30/18, B60W 10/02, B60W 10/06

(54) **VERFAHREN ZUM UMSCHALTEN VON EINEM SEGEL- ODER FREIROLLBETRIEB EINES KRAFTFAHRZEUGS AUF EINEN SCHUBABSCHALTUNGSBETRIEB**
METHOD FOR SWITCHING FROM A SAIL OR FREEWHEEL MODE OF A MOTOR VEHICLE TO AN OVERRUN CUT-OFF MODE
PROCÉDÉ PERMETTANT DE PASSER D'UN MODE ROUE LIBRE OU RÉGIME DE RALENTI D'UN VÉHICULE AUTOMOBILE À UN MODE COUPURE DE L'ALIMENTATION

(30) Priorität: 16.04.2012 DE 102012206135
(43) Veröffentlichungstag der Anmeldung: 25.02.2015
(73) Patentinhaber: Ford Global Technologies, LLC, Dearborn, MI 48126 (US)
(72) Erfinder: CHRISTEN, Urs, 52072 Aachen (DE); BUSCH, Rainer, 52076 Aachen (DE); ALPMAN, Erik, 52064 Aachen (DE); OLDKNOW, Ian, Hertfordshire AL4 0GB (GB)
(74) Vertreter: Dörfler, Thomas
(86) Internationale Anmeldenummer: PCT/EP2013/057568
(87) Internationale Veröffentlichungsnummer: WO 2013/156381

(56) Entgegenhaltungen:
- EP-A1- 2 327 901
- DE-A1- 3 130 453
- DE-A1- 4 419 633
- DE-A1- 10 221 701
- DE-A1-102009 046 340

## Beschreibung

Die Erfindung betrifft ein Verfahren zum Umschalten von einem Segel- oder Freirollbetrieb eines Kraftfahrzeugs mit Verbrennungsmotor und automatischer Kupplung, die während des Segel- oder Freirollbetriebs geöffnet ist, auf einen Schubabschaltungsbetrieb bei geschlossener Kupplung, gemäß dem Oberbegriff des Anspruchs 1 sowie eine entsprechende Vorrichtung.

Bei Kraftfahrzeugen mit Verbrennungsmotor und automatischer Kupplung ist eine automatische Umschaltung auf Segelbetrieb bekannt, wenn der Fahrer keinen Vortrieb anfordert, d.h., wenn dieser das Fahrpedal nicht betätigt. Segeln ist ein Zustand, in dem der Antriebsstrang durch automatisches Öffnen der Kupplung geöffnet ist und der Verbrennungsmotor im Leerlauf weiterläuft. Indem das Schleppmoment des Verbrennungsmotors beseitigt wird, kann Kraftstoff eingespart werden. Falls der Fahrer die Fahrzeugbremsen betätigt, wird jedoch das konventionelle Verhalten von Kraftfahrzeugen ohne automatische Kupplung bevorzugt, bei dem das Kraftfahrzeug im Schubabschaltungsbetrieb arbeitet.

Schubabschaltung, die ebenfalls der Kraftstoffeinsparung dient, bedeutet eine Unterbrechung der Kraftstoffzufuhr zum Verbrennungsmotor, so dass dieser keine Leistung abgibt, sondern nur durch die Schwungmasse des Fahrzeugs am Laufen gehalten wird, also bei geschlossener Kupplung vom Fahrzeug angeschoben wird, wobei der Verbrennungsmotor als Bremse wirkt und das Kraftfahrzeug aufgrund des Schleppmoments des Verbrennungsmotors eine Verzögerung erfährt.

Eine Alternative zu einem Segelbetrieb stellt ein sog. Freirollbetrieb oder Roll-Start/Stopp-Betrieb (RSS) dar, wobei die Kraftstoffzufuhr zum Verbrennungsmotor ganz abgeschaltet wird. Auch diesem Fall wird das Schleppmoment des Verbrennungsmotors beseitigt.

Beide genannten Betriebsarten, Segelbetrieb und Freirollbetrieb, sind bei allen Antriebssträngen möglich, die auf irgendeine Weise automatisch geöffnet werden können. Dies gilt selbstverständlich für Automatikgetriebe (konventionelle Drehmomentwandler- oder Doppelkupplungs-Getriebe), aber auch für automatisierte Schaltgetriebe (ASM), stufenlose Getriebe (CVT) sowie für Handschaltgetriebe, die mit einer automatischen, d.h. elektrisch bzw. elektronisch betätigten Kupplung ausgestattet sind. Im Rahmen dieser Offenbarung soll der Begriff Segel- oder Freirollbetrieb auch dazugehörige Phasen umfassen, in denen der Verbrennungsmotor bei geöffneter Kupplung vorübergehend mit anderen Drehzahlen als der Leerlaufdrehzahl betrieben wird.

Aus der DE 102 21 701 A1 ist ein gattungsgemäßes Verfahren bekannt, bei dem das Umschalten von Segel- oder Freirollbetrieb auf Schubabschaltungsbetrieb relativ sanft erfolgt, um für den Fahrer nahezu unbemerkt zu bleiben. Doch soll es insofern durchaus bemerkt werden, als der Fahrer eine Rückmeldung über den Wechsel des Fahrzustands bekommen soll.

Der Erfindung liegt die Aufgabe zu Grunde, das Umschalten von Segel- oder Freirollbetrieb auf Schubabschaltungsbetrieb für den Fahrer noch komfortabler zu gestalten.

Diese Aufgabe wird durch ein Verfahren und durch eine Vorrichtung mit den Merkmalen der unabhängigen Patentansprüche gelöst. Vorteilhafte Weiterbildungen der Erfindung sind in den abhängigen Patentansprüchen angegeben.

Die Erfindung beruht auf der Erkenntnis, dass es Fahrsituationen gibt, in denen der Fahrer keine Rückmeldung über das Umschalten von Segel- oder Freirollbetrieb auf Schubabschaltungsbetrieb erwartet, sondern dadurch eher gestört oder irritiert wird. Dies kann durch die Erfindung vermieden werden.

Eine derartige Fahrsituation ist z.B. jene, dass ein Kraftfahrzeug im Segel- oder Freirollbetrieb hinter einem anderen Kraftfahrzeug fährt, das mit Schubabschaltung fährt, z.B. weil darin kein Segel- oder Freirollbetrieb vorgesehen ist. Wenn der Fahrer des im Segel- oder Freirollbetrieb fahrenden Kraftfahrzeugs z.B. beim Heranrollen an eine rote Ampel erwartet, dass das vor ihm fahrende Fahrzeug auf konventionelle Weise verzögert, wird der Segel- oder Freirollbetrieb normalerweise nicht beendet, solange der Fahrer die Bremse nur leicht betätigt. Doch wenn der Fahrer des im Segel- oder Freirollbetrieb fahrenden Fahrzeugs von dem Verhalten des vor ihm fahrenden Fahrzeugs überrascht wird, muss er die Bremse so stark betätigen, dass der Segel- oder Freirollbetrieb automatisch beendet wird. In diesem Fall ist es für den Fahrer störend, das Umschalten in den Schubabschaltungsbetrieb zu spüren und die damit verbundene plötzliche zusätzliche Bremswirkung zu erfahren.

Eine andere derartige Fahrsituation ist z.B. jene, dass ein Kraftfahrzeug im Segel- oder Freirollbetrieb gerade eine abschüssige Straße hinab fährt. Auch dann sollte der Segel- oder Freirollbetrieb automatisch beendet werden, doch ist es für den Fahrer irritierend, das Umschalten in den Schubabschaltungsbetrieb zu spüren.

Die Fahrzeugelektronik, die den Betrieb von Motor, Kupplung und Getriebe steuert, ist in der Lage, Fahrsituationen beider oben genannten Arten automatisch zu erkennen, und zwar jene von der zuerst beschriebenen Art daran, dass während des Segel- oder Freirollbetriebs eine Bremsanforderung von Seiten des Fahrers erkannt wird, bei der das Bremsmoment der Fahrzeugbremse das gegenwärtig zur Verfügung stehende Bremsmoment des Verbrennungsmotors übersteigt, und jene von der zuletzt beschriebenen Art an Bedingungen, die unabhängig von Pedalbetätigungen durch den Fahrer sind, z.B. wenn Sensoren oder Navigationseinrichtungen des Kraftfahrzeug erkennen, dass das Kraftfahrzeug gerade eine abschüssige Straße hinab fährt. In beiden Fällen wird bei der Erfindung die Zunahme des auf das Kraftfahrzeug wirkenden Schleppmoments des Verbrennungsmotors während des Umschaltens von Segel- oder Freirollbetrieb auf Schubabschaltungsbetrieb so langsam und sanft gestaltet, dass der Fahrer davon nichts spürt.

Dies kann je nach Notwendigkeit auf zweierlei Weise durchgeführt werden. Zum einen kann die Kupplung so langsam geschlossen werden, dass die Änderung der Fahrzeugverzögerung während des Schließens der Kupplung einen voreingestellten Wert nicht übersteigt. Zusätzlich oder alternativ kann nach dem Schließen oder teilweise auch schon während des Schließens der Kupplung die Kraftstoffzufuhr zum Verbrennungsmotor so langsam vermindert werden, dass die Änderung der Fahrzeugverzögerung während des Umschaltens den voreingestellten Wert nicht übersteigt.

Dabei kann es zweckmäßig sein, bei einem Kraftfahrzeug mit Mehrganggetriebe für jeden Gang einen eigenen voreingestellten Wert vorzusehen, der auch in Abhängigkeit von dem Verhältnis zwischen dem durch die Bremsen an den Rädern erzeugten Bremsmoment und dem maximalen, vom Verbrennungsmotor erzeugten Schleppmoment aus mehreren voreingestellten Werten ausgewählt werden kann.

Die Zeit, die es dauert, das Schleppmoment des Verbrennungsmotors während des Umschaltens von Segel- oder Freirollbetrieb auf Schubabschaltungsbetrieb von null auf einhundert Prozent zu erhöhen, ohne dass der Fahrer dies bemerkt, liegt typischerweise in einem Bereich von ungefähr 1 bis 5 Sekunden.

Es folgt eine Beschreibung von Ausführungsbeispielen anhand der Zeichnung. Darin zeigen:
- Fig. 1: einen Graphen zur Veranschaulichung des Prinzips des allmählichen Abbaus der Kompensation des Schleppmoments nach Beendigung eines Segel- oder Freirollbetriebs; und
- Fig. 2: eine dreidimensionale Darstellung eines Beispiels für allmählichen Abbau der Kompensation des Schleppmoments nach Beendigung eines Segel- oder Freirollbetriebs in Abhängigkeit von dem Verhältnis zwischen dem durch Bremsen erzeugten Bremsmoment und dem maximalen vom Verbrennungsmotor erzeugten Schleppmoment.

In einem Kraftfahrzeug, das sich gerade in einer Segel- oder Freirollbetriebsart befindet, wird unter bestimmten Bedingungen, z.B. wenn während eines Segel- oder Freirollbetriebs eine Bremsanforderung des Fahrers erkannt wird, bei der das Bremsmoment der Fahrzeugbremse das gegenwärtig zur Verfügung stehende Bremsmoment des Verbrennungsmotors übersteigt, oder wenn das Kraftfahrzeug gerade eine abschüssige Straße hinab fährt, der Segel- oder Freirollbetrieb für den Fahrer unmerklich automatisch beendet.

Dazu wird bei Beendigung des Segel- oder Freirollbetriebs das Schleppmoment des Verbrennungsmotors zunächst vollständig kompensiert, so dass der Antriebsstrang kein Drehmoment an den Fahrzeugrädern hervorruft. Um dies zu bewirken, führt die Fahrzeugelektronik, die unter anderem den Betrieb von Motor, Kupplung und Getriebe steuert, dem Verbrennungsmotor eine entsprechende Kraftstoffmenge zu.

Nachfolgend wird die Kompensation des Schleppmoments allmählich abgebaut, indem die dem Verbrennungsmotor zugeführte Kraftstoffmenge verringert wird, und zwar so langsam, dass die Änderung der Fahrzeugverzögerung aufgrund des zunehmenden Schleppmoments einen voreingestellten Wert nicht übersteigt, der so gewählt ist, dass das Umschalten vom Fahrer normalerweise nicht bemerkt wird.

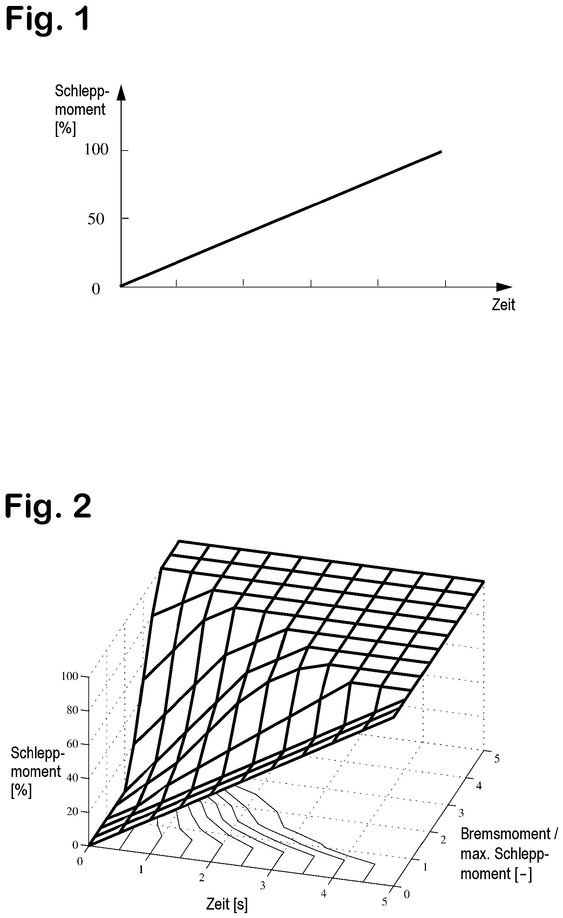

Zu diesem Zweck wird im Ausführungsbeispiel die Kompensation des Schleppmoments gemäß einer linearen Funktion von null auf einhundert Prozent abgebaut, wie in Fig. 1 gezeigt. Da Fahrer gewöhnlich die Position der Pedale laufend an die gewünschte Verzögerung anpassen, ohne sich dessen immer bewusst zu sein, bemerken sie einen derartigen langsamen Übergang von Segel- oder Freirollbetrieb auf Schubabschaltungsbetrieb normalerweise nicht.

In einer Weiterbildung kann der allmähliche Abbau der Kompensation des Schleppmoments von dem Verhältnis zwischen dem durch die Bremsen an den Rädern erzeugten Bremsmoment und dem maximalen vom Verbrennungsmotor erzeugten Schleppmoment für den gerade eingelegten Gang abhängig gemacht werden. Wenn das Verhältnis groß ist, d.h. wenn das aktuelle Bremsmoment viel höher als das maximale Schleppmoment ist, kann der allmähliche Abbau der Kompensation des Schleppmoments viel schneller erfolgen als wenn das Verhältnis ungefähr gleich 1 ist, was das übliche Kriterium für eine Beendigung des Segel- oder Freirollbetriebs ist, oder wenn es kein Bremsmoment gibt, weil die Fahrzeugelektronik den Segel- oder Freirollbetrieb aus anderen Gründen beendet als dass der Fahrer das Bremspedal betätigt. Idealerweise erfolgt der Abbau der Kompensation des Schleppmoments auch gangabhängig, da das Schleppmoment in höheren Gängen niedriger ist und damit schneller abgebaut werden kann als in niedrigeren Gängen, ohne dass der Fahrer das Umschalten bemerkt.

Diese Weiterbildung kann mit einem Satz von zweidimensionalen Nachschlagtabellen realisiert werden, einer für jeden Gang. Der mit einer solchen Nachschlagtabelle realisierte zeitliche Verlauf des Abbaus der Kompensation des Schleppmoments nach Beendigung eines Segel- oder Freirollbetriebs in Abhängigkeit von dem Verhältnis zwischen dem durch Bremsen erzeugten Bremsmoment und dem maximalen vom Verbrennungsmotor erzeugten Schleppmoment ist in Fig. 2 gezeigt. Darin beschreiben die beiden unabhängigen Achsen die Zeit nach Beendigung des Segel- oder Freirollbetrieb bzw. das Verhältnis des aktuell wirkenden Bremsmoments zu dem maximalen Schleppmoment. Die vertikale Achse beschreibt den prozentualen Wert des gerade wirksamen Schleppmoments. Für jeden Gang gibt es eine eigene zweidimensionale Nachschlagtabelle wie in Fig. 2.

Für Verhältnisse zwischen dem durch Bremsen erzeugten Bremsmoment und dem maximalen vom Verbrennungsmotor erzeugten Schleppmoment, die kleiner als 1 sind, erfolgt der Abbau der Kompensation des Schleppmoments am langsamsten, und dieser zeitliche Verlauf findet auch Anwendung, wenn der Segel- oder Freirollbetrieb aus anderen Gründen beendet wird als dass der Fahrer das Bremspedal betätigt.

Um Schwankungen des Schleppmoments zu vermeiden, wenn der Fahrer die Bremspedalposition während des Abbaus der Kompensation des Schleppmoments ändert, kann entweder der Anfangswert des Momentenverhältnisses für die ganze Zeit des Abbaus der Schleppmomentkompensation verwendet werden, oder die Schleppmomentkompensation erfolgt derart, dass sie während der Zeit ihres Abbaus nur langsamer, aber nicht mehr schneller gemacht werden kann.

Wie erwähnt, gibt es Fälle, in denen die Fahrzeugelektronik einen Segel- oder Freirollbetrieb auch ohne Pedalbetätigungen durch den Fahrer beendet. Dazu gehören auch Fälle, in denen der Fahrer eine deutlich spürbare Änderung der Fahrzeugverzögerung erwartet, d.h. das Einsetzen des Schleppmoments spüren sollte. Ein derartiger Fall liegt beispielsweise vor, wenn der Fahrer den Segelbetrieb bewusst deaktiviert, indem er einen entsprechenden Schalter betätigt, oder den Getriebesteuerhebel in eine andere Stellung als die Stellung D (Drive) bringt. Daher ist für jeden Grund für eine Beendigung des Segel- oder Freirollbetrieb individuell im Voraus festzulegen, ob dies mit dem beschriebenen langsamen Umschalten auf Schubabschaltungsbetrieb erfolgen soll oder nicht.

## Patentansprüche

1. Verfahren zum Umschalten von einem Segel- oder Freirollbetrieb eines Kraftfahrzeugs mit Verbrennungsmotor und automatischer Kupplung, die während des Segel- oder Freirollbetriebs geöffnet ist, auf einen Schubabschaltungsbetrieb, bei dem die Kupplung geschlossen ist, wobei vor dem Schließen der Kupplung der Verbrennungsmotor auf eine Drehzahl gebracht wird, bei der das Schließen der Kupplung keine oder nur geringe Drehmomentänderungen im Antriebsstrang induziert, und wobei nach dem Schließen der Kupplung die Kraftstoffzufuhr zum Verbrennungsmotor reduziert wird, derart, dass das Umschalten von Segel- und Freirollbetrieb auf Schubabschaltungsbetrieb in der Regel relativ sanft erfolgt, aber der Fahrer eine Rückmeldung über den Wechseldes Fahrzustands bekommt,
**dadurch gekennzeichnet, dass**
unter einer oder mehreren vorbestimmten Bedingungen, die bestimmten Fahrsituationen entsprechen, die Zunahme des auf das Kraftfahrzeug wirkenden Schleppmoments des Verbrennungsmotors während des Umschaltens von Segel- oder Freirollbetrieb auf Schubabschaltungsbetrieb so sanft gestaltet wird, dass der Fahrer davon nichts spürt, indem die Kupplung so langsam geschlossen wird, dass die Änderung der Fahrzeugverzögerung während des Schließens der Kupplung einen voreingestellten Wert nicht übersteigt, und/oder indem nach dem Schließen oder teilweise auch schon während des Schließens der Kupplung die Kraftstoffzufuhr zum Verbrennungsmotor so langsam vermindert wird, dass die Änderung der Fahrzeugverzögerung während des Umschaltens von Segel- oder Freirollbetrieb auf Schubabschaltungsbetrieb den voreingestellten Wert nicht übersteigt.

2. Verfahren nach Anspruch 1,
**dadurch gekennzeichnet, dass**
die langsame Zunahme des Schleppmoments des Verbrennungsmotors während des Umschaltens von Segel- oder Freirollbetrieb auf Schubabschaltungsbetrieb unter der Bedingung stattfindet, dass während des Segel- oder Freirollbetriebs eine Bremsanforderung von Seiten des Fahrers erkannt wird, bei der das Bremsmoment der Fahrzeugbremse das gegenwärtig zur Verfügung stehende Bremsmoment des Verbrennungsmotors übersteigt.

3. Verfahren nach Anspruch 1 oder 2,
**dadurch gekennzeichnet, dass**
die langsame Zunahme des Schleppmoments des Verbrennungsmotors während des Umschaltens von Segel- oder Freirollbetrieb auf Schubabschaltungsbetrieb (auch) unter mindestens einer Bedingung stattfindet, die unabhängig von irgendwelchen Pedalbetätigungen durch den Fahrer ist.

4. Verfahren nach Anspruch 3,
**dadurch gekennzeichnet, dass**
die mindestens eine Bedingung, die unabhängig von irgendwelchen Pedalbetätigungen ist, die Bedingung ist oder umfasst, dass das Kraftfahrzeug gerade eine abschüssige Straße hinab fährt.

5. Verfahren nach einem der vorhergehenden Ansprüche,
**dadurch gekennzeichnet, dass**
der voreingestellte Wert in Abhängigkeit von dem gerade eingelegten Gang und/oder in Abhängigkeit von dem Verhältnis zwischen dem durch die Bremsen an den Rädern erzeugten Bremsmoment und dem maximalen vom Verbrennungsmotor erzeugten Schleppmoment aus mehreren voreingestellten Werten ausgewählt wird.

6. Verfahren nach einem der vorhergehenden Ansprüche,
**dadurch gekennzeichnet, dass**
das auf das Kraftfahrzeug wirken gelassene Schleppmoment des Verbrennungsmotors während des Umschaltens von Segel- oder Freirollbetrieb auf Schubabschaltungsbetrieb während einer Zeitspanne von ungefähr 1 bis 5 Sekunden von null auf einhundert Prozent erhöht wird.

7. Vorrichtung zum Umschalten von einem Segel- oder Freirollbetrieb eines Kraftfahrzeugs mit Verbrennungsmotor und automatischer Kupplung auf Schubabschaltungsbetrieb,
**dadurch gekennzeichnet, dass**
die Vorrichtung zur Durchführung des Verfahrens nach einem der vorhergehenden Ansprüche eingerichtet ist.

## Claims

1. Method for switching over from a coasting or freewheeling mode of a motor vehicle with an internal combustion engine and an automatic clutch which is open during the coasting or freewheeling mode, to an overrun deactivation mode, in the case of which the clutch is closed, the internal combustion engine being brought to a rotational speed before the closure of the clutch, at which rotational speed the closure of the clutch induces no or merely low torque changes in the drive train, and, after the closure of the clutch, the fuel supply to the internal combustion engine being reduced in such a way that the switchover from the coasting and freewheeling mode to the overrun deactivation mode as a rule takes place relatively gently, but the driver receives feedback about the change in the driving state, **characterized in that**, under one or more predefined conditions which correspond to defined driving situations, the increase in the drag torque of the internal combustion engine which acts on the motor vehicle is designed to be so gentle during the switchover from the coasting or freewheeling mode to the overrun deactivation mode that the driver does not perceive it, by the clutch being closed so slowly that the change in the vehicle deceleration during the closure of the clutch does not exceed a preset value, and/or by the fuel supply to the internal combustion engine being reduced so slowly during the closure of the clutch that the change in the vehicle deceleration during the switchover from the coasting or freewheeling mode to the overrun deactivation mode does not exceed the preset value.

2. Method according to Claim 1, **characterized in that** the slow increase in the drag torque of the internal combustion engine during the switchover from the coasting or freewheeling mode to the overrun deactivation mode takes place under the condition that a brake request on the part of the driver is detected during the coasting or freewheeling mode, in the case of which the brake torque of the vehicle brake exceeds the currently available brake torque of the internal combustion engine.

3. Method according to Claim 1 or 2, **characterized in that** the slow increase in the drag torque of the internal combustion engine during the switchover from the coasting or freewheeling mode to the overrun deactivation mode (also) takes place under at least one condition which is independent of any pedal actuations by way of the driver.

4. Method according to Claim 3, **characterized in that** the at least one condition which is independent of any pedal actuations is or comprises the condition that the motor vehicle is currently driving down a steep road.

5. Method according to one of the preceding claims, **characterized in that** the preset value is selected from a plurality of preset values in a manner which is dependent on the currently engaged gear and/or in a manner which is dependent on the ratio between the brake torque which is generated at the wheels by way of the brakes and the maximum drag torque which is generated by the internal combustion engine.

6. Method according to one of the preceding claims, **characterized in that** the drag torque of the internal combustion engine which is allowed to act on the motor vehicle is increased from zero to one hundred per cent during a time period of approximately from 1 to 5 seconds during the switchover from the coasting or freewheeling mode to the overrun deactivation mode.

7. Apparatus for switching over from a coasting or freewheeling mode of a motor vehicle with an internal combustion engine and an automatic clutch to an overrun deactivation mode, **characterized in that** the apparatus is set up to carry out the method according to one of the preceding claims.

## Revendications

1. Procédé de commutation d'un fonctionnement en planeur ou en roule libre d'un véhicule automobile à moteur à combustion interne et à embrayage automatique, qui est ouvert pendant le fonctionnement en planeur ou en roue libre, à un fonctionnement en arrêt de poussée lors duquel l'embrayage est fermé, le moteur à combustion interne étant amené, avant la fermeture de l'embrayage, à une vitesse à laquelle la fermeture de l'embrayage induit peu ou pas de changements de couple dans la chaîne cinématique et, après la fermeture de l'embrayage, l'alimentation en carburant du moteur à combustion étant réduite de telle sorte que la commutation du fonctionnement en planeur et en roue libre au fonctionnement en arrêt de poussée soit en général effectuée relativement en douceur, le conducteur recevant cependant un retour d'information sur le changement d'état de roulement,
**caractérisé en ce que**
dans une ou plusieurs conditions prédéterminées correspondant à des situations de roulement déterminées, l'augmentation du couple de traînée, agissant sur le véhicule automobile, du moteur à combustion interne est démarrée en douceur lors de la commutation d'un fonctionnement en planeur ou en roue libre à un fonctionnement en arrêt de poussée de sorte que le conducteur ne la ressent pas du fait que l'embrayage est fermé si lentement que la variation de décélération du véhicule lors de la fermeture de l'embrayage ne dépasse pas une valeur préréglée et/ou du fait que l'alimentation en carburant du moteur à combustion interne est réduite si lentement après la fermeture ou parfois même pendant la fermeture de l'embrayage que la variation de décélération du véhicule lors de la commutation du fonctionnement en planeur ou en roue libre au fonction en arrêt de poussée ne dépasse pas la valeur préréglée.

2. Procédé selon la revendication 1,
**caractérisé en ce que**
la lente augmentation du couple de traînée du moteur à combustion interne pendant la commutation du fonctionnement en planeur ou en roue libre au fonctionnement en arrêt de poussée est effectuée à condition qu'une demande de freinage de la part du conducteur soit reconnue pendant le fonctionnement en planeur ou en roue libre, demande lors de laquelle le couple de freinage du frein de véhicule devient supérieur au couple de freinage actuellement disponible du moteur à combustion interne.

3. Procédé selon la revendication 1 ou 2,
**caractérisé en ce que**
la lente augmentation du couple de traînée du moteur à combustion interne pendant la commutation du fonctionnement en planeur ou en roue libre au fonctionnement en arrêt de poussée est effectuée (également) dans au moins une condition indépendante de tout actionnement de la pédale par le conducteur.

4. Procédé selon la revendication 3,
**caractérisé en ce que**
l'au moins une condition, qui est indépendante de tout actionnement de la pédale, est ou comprend la condition selon laquelle le véhicule automobile se déplace en ligne droite sur une route en pente.

5. Procédé selon l'une des revendications précédentes,
**caractérisé en ce que**
la valeur préréglée est choisie parmi plusieurs valeurs préréglées en fonction de la vitesse actuellement engagée et/ou en fonction du rapport entre le couple de freinage généré par les freins sur les roues et le couple de traînée maximal généré par le moteur thermique.

6. Procédé selon l'une des revendications précédentes,
**caractérisé en ce que**
le couple de traînée du moteur à combustion interne, qui est autorisé à agir sur le véhicule automobile, est augmenté de zéro à cent pour cent sur une durée d'environ 1 à 5 secondes pendant la commutation du fonctionnement en planeur ou en roue libre au fonctionnement en arrêt de poussée.

7. Dispositif de commutation d'un fonctionnement en planeur ou en roulis libre d'un véhicule automobile à moteur à combustion interne et à embrayage automatique à un fonctionnement en arrêt de poussée,
**caractérisé en ce que**
le dispositif est conçu pour mettre en œuvre le procédé selon l'une des revendications précédentes.
